# EUROPÄISCHE PATENTSCHRIFT

(11) **EP 0 452 735 B1**
(45) Veröffentlichungstag und Bekanntmachung des Hinweises auf die Patenterteilung: **06.07.1994**
(21) Anmeldenummer: 91105299.1
(22) Anmeldetag: 04.04.1991
(51) Int. Cl.: B23B 39/02, B23Q 1/02

(54) **Bearbeitungszentrum**
Machining centre
Centre d'usinage

(30) Priorität: 20.04.1990 DE 4012690
(43) Veröffentlichungstag der Anmeldung: 23.10.1991
(73) Patentinhaber: MAHO Aktiengesellschaft, D-87459 Pfronten (DE)
(72) Erfinder: Babel, Werner, W-8962 Pfronten (DE)
(74) Vertreter: Beetz & Partner Patentanwälte

(56) Entgegenhaltungen:
- EP-A- 0 152 081
- DE-A- 1 652 668
- DE-A- 2 521 052
- DE-A- 2 833 145
- DE-A- 3 620 247
- FR-A- 2 576 817

## Beschreibung

Die Erfindung betrifft ein Bearbeitungszentrum insbesondere zur spanenden Bearbeitung von metallischen Werkstücken der im Oberbegriff des Patentanspruchs 1 angegebenen Gattung.

Werkzeugmaschinen in Bettanordnung werden bisher zur Bearbeitung von schweren Werkstücken bevorzugt, weil der Werkstücktisch auf dem starren Maschinenbett aufliegt. Die notwendige Vertikalbewegung wird vom Spindelstock übernommen, der an dem auf dem Bett starr befestigten oder in einer Achse bewegbar angeordneten Ständer verschiebbar geführt ist. Der Werkstücktisch kann als Kreuz- und/oder Drehtisch ausgeführt sein und auf breiten formsteifen Führungsbahnen des Bettes aufliegen, was eine hohe statische und dynamische Steifigkeit ergibt. Die bekannten Bearbeitungszentren in Bettausführung sind meist nach Prinzipien konzipiert, die von herkömmlichen nur teilautomatisierten Werkzeugmaschinen übernommen wurden. Obgleich durch entsprechende Steuerungen, die Verwendung von Werkzeugmagazinen mit automatischem Werkzeugwechsel sowie von Werkstückpaletten bei bestehenden Bearbeitungszentren ein vollständiger Automatisierungsgrad erreicht worden ist, sind diesen bekannten Bearbeitungszentren aufgrund ihres technischen Grndkonzeptes Grenzen bei der schnellen und universalen Bearbeitung von Werkstücken gesetzt, die beispielsweise auf relativ lange Wechselzeiten der Werkzeuge und/oder Werkstücke, auf eine nicht optimal gelöste Späneabfuhr, auf durch Wärmedehnung oder Schwingungen verursachte Ungenauigkeiten od. dgl. zurückzuführen sind.

Aus der DE-A-25 21 052 ist eine gattungsgemäße Werkzeugmaschine bekannt, bei der auf einem gemeinsamen nach rückwärts abfallenden Schrägbett eine Bearbeitungseinheit angeordnet ist, die ein auf dem hinteren Teil des Schrägbettes fest montiertes Zwischenbett, einen auf dem Zwischenbett längs verfahrbaren Kreuzschlitten, ein darauf quer verfahrbares Spindelgehäuse und einen an der Stirnseite des Spindelgehäuses senkrecht zu dessen Längsachse verfahrbaren Spindelkopf aufweist. Auf dem ebenfalls schrägen Vorderteil des Schrägbettes ist ein Werkstücktisch in Bettlängsrichtung verfahrbar montiert.

Aufgabe der Erfindung ist es, ein Bearbeitungszentrum insbesondere für die Serienfertigung kleinerer und mittel großer Werkstücke zu schaffen, bei dem die vom vollautomatischen Arbeitsablauf herrührenden Forderungen, wie z. B. kurze Wechselzeiten, zuverlässige Späneabführung, geringer Einfluß von Wärmedehnungen und Schwingungen auf die Bearbeitungsgenauigkeit, Integrierbarkeit des Bearbeitungszentrums in Transferlinien usw., in konsequenter Weise erfüllt sind.

Diese Aufgabe wird erfindungsgemäß durch die im Patentanspruch 1 angegebenen Merkmale gelöst.

Das nach hinten unter einem spitzen Winkel abfallende Schrägbett hat gegenüber herkömmlichen Horizontalbetten den Vorteil, daß das für die Führungsbahnschmierung erforderliche Öl auf der Bettoberseite nach hinten in eine rückseitig angeordnete Rinne ablaufen und von der Kühlflüssigkeit für Werkzeuge getrennt aufgefangen werden kann. Darüber hinaus ergibt sich die Möglichkeit einer lagestabilen Dreipunktabstützung des Bettes auf dem Fundament, wobei die beiden hinteren Stützfüße bevorzugt die vom Schlitten, dem Ständer und dem Bearbeitungskopf herrührenden Gewichte aufnehmen und der an der Vorderseite des Bettes in der Bewegungsachse des Ständers angeordnete Stützfuß bevorzugt das Gewicht des Werkstücktisches incl. dessen Konsole aufnimmt. Die Anordnung dieses Werkstücktisches an der vorderen Stirnseite des Bettes begünstigt schnelle Wechsel der auf Paletten montierten Werkstücke, da der Werkstücktisch über die Vorderseite des Bettes vorsteht und zur einfachen Übergabe der Paletten frei zugänglich ist. Wenn der Werkzeugtisch an stirnseitigen Halterungen des Bettes fest montiert ist, sind die bisher üblichen Verfahrbewegungen in die Paletten-Wechselstellung nicht erforderlich, was die Wechselzeiten verkürzt.

Die erfindungsgemäße Anordnung des Werkstücktisches an der Bettstirnseite eröffnet die Möglichkeit einer wesentlich verbesserten Späneabführung durch einen oder mehrere Späneschächte, die zwischen und neben den Tischhalterungen im Bett ausgebildet sind und in einen unteren Spänekanal ausmünden.

Gemäß einer anderen zweckmäßigen Ausgestaltung der Erfindung weist der auf den horizontalen Querführungen des Schlittens verfahrbare Ständer zwei formsteife Säulen von zweckmäßig rechtwinkligem Querschnitt auf, die durch ein unteres und ein oberes Querhaupt starr miteinander verbunden sind und an deren innenseitigen Vertikalführungen der Bearbeitungskopf beidseitig geführt ist. Eine besonders hohe Steifigkeit ergibt sich, wenn die beiden Säulen und das obere und das untere Querhaupt als einstückiges Bauteil ausgeführt sind. Die verschiedenartigen Bearbeitungsköpfe können von hinten in den Ständer montiert werden, was eine relativ einfache Anpassung an unterschiedliche Bearbeitungswünsche der Kunden ermöglicht.

Gemäß einer anderen zweckmäßigen Weiterbildung der Erfindung kann an der Vorderseite des Ständers eine Späneschürze vorgesehen sein, auf der die Späne zusammen mit der Kühl- und Spülflüssigkeit in die vertikalen Späneschächte des Bettes rutschen. Diese Späneschürze wird zweckmäßigerweise jalousieartig ausgebildet und mit ihrem unteren Ende am Bett sowie mit ihrem oberen Ende am Bearbeitungskopf befestigt, so daß die Führungen des Schlittens und auch des rahmenartigen Ständers stets gegen den Arbeitsraum abgedeckt sind.

Die Anordnung des Tisches an der vertikalen Stirnseite des Bettes ermöglicht ferner den Anbau verschiedenartiger Tischausführungen am Bett mit jeweils gleichbleibender Formsteifigkeit.

Schließlich zeichnet sich eine zweckmäßige Weiterbildung der Erfindung noch dadurch aus, daß neben dem Ständer das Werkzeugmagazin mit seinem Werkzeugwechsler ortsfest vorgesehen sind, wobei das Magazin durch eine Bewegung des Schlittens angefahren wird.

Weitere Vorzüge und Besonderheiten des erfindungsgemäßen Bearbeitungszentrums sind bei den in der Zeichnung dargestellten Ausführungsbeispielen verwirklicht, die im folgenden ausführlich beschrieben werden. Es zeigen:
- Fig. 1: eine erste Ausführung des erfindungsgemäßen Bearbeitungszentrums mit einem Palettenwechsler und einem Schwenktisch in schematischer perspektivischer Darstellung und
- Fig. 2: ein Bearbeitungszentrum mit jeweils gesondert dargestellten verschiedenartigen Bearbeitungsköpfen und Werkstücktischen in schematischer perspektivischer Darstellung.

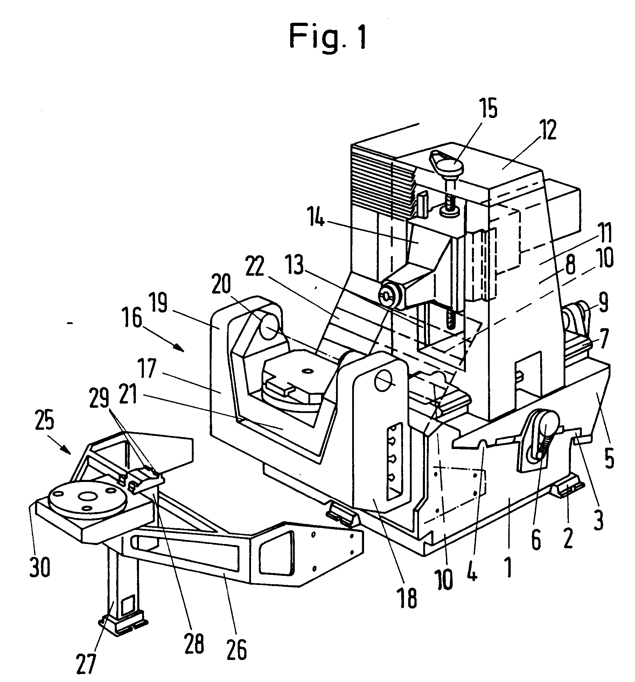

Das in Fig. 1 dargestellte Bearbeitungszentrum enthält ein Schrägbett 1, das über zwei hintere und einen mittleren vorderen Fuß 2 auf dem Fundament ruht. Die schräg nach rückwärts unter einem relativ spitzen Winkel von 10 bis 30° geneigte Oberfläche des Betts 1 weist zwei in Bettlängsrichtung horizontal verlaufende Führungsleisten 3, 4 auf, auf denen ein Schlitten 5 mittels eines motorischen Antriebs 6 verfahrbar geführt ist. Auf der horizontalen Oberfläche des im Querschnitt dreieckigen bzw. trapezförmigen Schlittens 5 sind Querführungen 7 angeordnet, auf denen ein als geschlossener Rahmen ausgeführter Ständer 8 mittels eines Antriebs 9 verfahrbar geführt ist. Der Ständer 8 besitzt ein unteres Querhaupt 10, das einteilig mit den beiden im Querschnitt rechteckigen Ständersäulen 11 und dem oberen Querhaupt 12 ausgeführt ist, um die Steifigkeit zu erhöhen. An den Innenseiten der beiden Ständersäulen sind Vertikalführungen 13 montiert, an denen ein Bearbeitungskopf 14 beidseitig geführt ist und mittels eines Antriebes 15 bewegt werden kann.

An der vertikalen vorderen Stirnseite des Bettes 1 ist ein Schwenktisch 16 fest montiert, der aus einem C-förmigen formsteifen Rahmen 17 und einem in den beiden Rahmenschenkeln 18, 19 um eine Achse 20 schwenkbar gelagerten Tragbügel 21 besteht, in dessen Mittelteil ein Drehtisch montiert ist. An der Vorderseite des Ständers ist eine - teilweise gestrichelt dargestellte - Schürze 22 vorgesehen, die zweckmäßig als Jalousie ausgeführt und mit ihrem oberen Rand am Bearbeitungskopf befestigt ist, so daß bei einer Vertikalbewegung des Bearbeitungskopfes 14 der Raum zwischen der Ständervorderseite und dem Werkstücktisch ständig abgedeckt ist. Die Schürze sollte sich in Längsrichtung über die gesamte Länge des Betts erstrecken und eine Längsbewegung des Schlittens zusammen mit dem Ständer ermöglichen. Zu diesem Zweck kann die Schürze an ihrem oberen Ende eine Führungsschiene aufweisen, in die ein am Bearbeitungskopf montierter Gleitstein eingreift.

Bei dem in Fig. 1 dargestellten Bearbeitungszentrum ist ein Palettenwechsler 25 vor dem Werkstück-Schwenktisch 16 positioniert dargestellt, der über eine horizontale Bügelkonstruktion 26 an den Seitenwänden (wie strichpunktiert dargestellt) oder auch an der Stirnseite des Betts 1 befestigt wird. Über eine Stütze 27 kann der Palettenwechsler 25 auf dem Fundament abgestützt werden. Eine Hub- und Drehsäule 28 ist mit diametral gegenüberliegenden Klauen 29 ausgerüstet, in die eine auf der Palettenaufnahme 30 abgelegte Palette durch eine Vertikalbewegung der Säule 28 eingehängt wird. Aufgrund einer Verdrehbewegung der Säule 28 erfolgt ein Palettenwechsel zwischen der dargestellten Ruhelage und der Arbeitsposition auf dem Werkstücktisch.

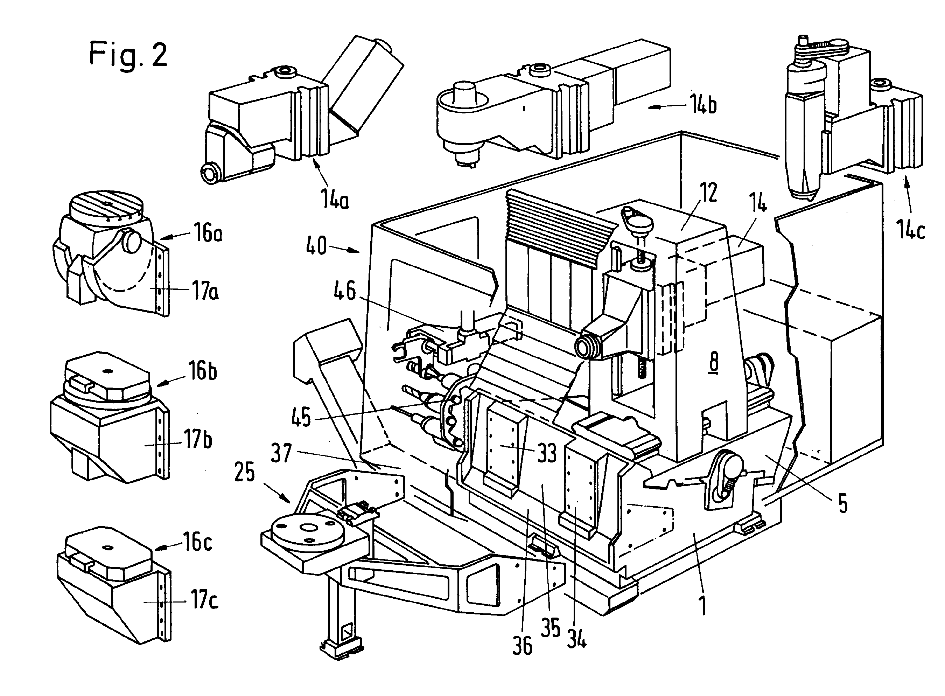

Das in Fig. 2 dargestellte Bearbeitungszentrum stimmt in seinen wesentlichen Bauteilen mit dem nach Fig. 1 überein, so daß gleiche Bauteile auch mit gleichen Bezugszeichen versehen sind. Es können wahlweise einer der links dargestellten Werkstücktische 16a, 16b, 16c mittels ihrer Konsolen 17a, 17b, 17c an den stirnseitigen Halterungen 33, 34 fest montiert werden, die an der vorderen Stirnseite des Bettes 1 vorgesehen sind. Zwischen den beiden Halterungen 33, 34 und an jeder Seite ist je ein vertikaler Spänekanal an der vorderen Stirnseite des Bettes ausgeführt, der über eine Schurre 36 in einen Späneförderer 37 ausmündet.

Im oberen Teil der Fig. 2 sind drei verschiedene Bearbeitungsköpfe 14a, 14b, 14c dargestellt, die wahlweise in den Ständer 8 eingebaut werden können. Ferner ist eine bei Bearbeitungszentren übliche Schutzkabine 40 vorgesehen. Statt der dargestellten Bearbeitungsköpfe mit drehangetriebenen Werkzeugen können beispielsweise auch spezielle Meßköpfe oder kombinierte Meß- und Bearbeitungsköpfe an den Doppel-Säulen-Ständer angebaut werden. Ferner läßt sich die Maschine als komplexe Bearbeitungseinheit auch an externe Werkstückträgersysteme und Transferlinien anbauen, wobei in diesen Fällen die dargestellten Tischausführungen durch geeignete Positioniereinheiten für die Werkstücke, z. B. Groß-Drehtische mit einer Vielzahl von Werkstückaufnahmen oder vertikale Paternoster-Säulen, ersetzt werden können.

## Patentansprüche

1. Bearbeitungszentrum, bestehend aus einem nach rückwärts abfalllenden Schrägbett 1, das an seiner Vorderseite einen Werkstücktisch (16) vorsieht, einem auf dem Schrägbett (1) längs verfahrbaren Schlitten (5), einem auf dem Schlitten (5) quer verfahrbaren Ständer (8) und einem am Ständer (8) vertikal verfahrbaren Bearbeitungskopf (14) sowie aus einem Werkzeugmagazin mit einem Werkzeugwechsler,
**dadurch gekennzeichnet,**
daß die vertikale Vorderseite des Schrägbetts (1) Halterungen (33, 34) zur Befestigung einer Tischkonsole (17) aufweist.

2. Bearbeitungszentrum nach Anspruch 1,
dadurch gekennzeichnet,
daß an der vertikalen Vorderseite des Schrägbetts (1) mindestens ein Späneschacht (35) vorgesehen ist.

3. Bearbeitungszentrum nach Anspruch 1 oder 2,
dadurch gekennzeichnet,
daß der Ständer (8) in einer Horizontalebene auf dem Schlitten (5) quer verfahrbar angeordnet ist.

4. Bearbeitungszentrum nach einem der Ansprüche 1 bis 3,
dadurch gekennzeichnet,
daß der Ständer (8) zwei durch mindestens ein Querhaupt (10, 12) starr miteinander verbundene formsteife Säulen (11) mit innenseitigen Vertikalführungen (13) aufweist, an denen der Bearbeitungskopf (14) beidseitig geführt ist.

5. Bearbeitungszentrum nach einem der Ansprüche 1 bis 4,
dadurch gekennzeichnet,
daß am Ständer (8) verschiedenartige Bearbeitungsköpfe (14, 14a bis 14c) wahlweise montierbar sind.

6. Bearbeitungszentrum nach einem der Ansprüche 1 bis 5,
dadurch gekennzeichnet,
daß an der Vorderseite des Ständers (8) eine mitfahrende Späneschürze (22) angeordnet ist, auf der die Späne in die Späneschächte (35) rutschen.

7. Bearbeitungszentrum nach Anspruch 6,
dadurch gekennzeichnet,
daß die Späneschürze (22) jalousieartig ausgebildet ist und mit ihrem unteren Ende am Bett (1) befestigt und der Bearbeitungskopf (14) an deren oberem Ende seitlich verschiebbar ist.

8. Bearbeitungszentrum nach einem der Ansprüche 1 bis 7,
dadurch gekennzeichnet,
daß am Schrägbett (1) verschiedenartige Werkzeugtische (16, 16a bis 16c) mit ihren Konsolen (17, 17a bis 17c) montierbar sind.

9. Bearbeitungszentrum nach einem der Ansprüche 1 bis 8,
dadurch gekennzeichnet,
daß neben dem Ständer (8) das Werkzeugmagazin (45) mit seinem Werkzeugwechsler (46) ortsfest angeordnet sind, wobei der Werkzeugwechsler durch eine Bewegung des Schlittens (5) angefahren wird.

## Claims

1. A processing centre, consisting of a rearwardly sloping inclined bed (1) presenting a work table (16) at the front, a carrier (15) traversable longitudinally on the inclined bed (1), a column (8) traversable transversely on the carrier (5), and a processing head (14) vertically traversable on the column (8), and a tool magazine with a tool changer, characterised in that the vertical front of the inclined bed (1) has holders (33, 34) for fixing a table bracket (17).

2. A processing centre according to claim 1, characterised in that at least one chip chute (35) is provided at the vertical front of the inclined bed (1).

3. A processing centre according to claim 1 or 2, characterised in that the column (8) is arranged to be traversable transversely on the carrier (5) in a horizontal plane.

4. A processing centre according to any one of claims 1 to 3, characterised in that the column (8) comprises two dimensionally stable columns (11) rigidly interconnected by at least one cross-member (10, 12) and having vertical guides (13) on the inside, the processing head (14) being guided on both sides at said guides (13).

5. A processing centre according to any one of claims 1 to 4, characterised in that different kinds of processing heads (14, 14a to 14c) can be fitted selectively on the column (8).

6. A processing centre according to any one of claims 1 to 5, characterised in that a chip apron (22) on which the chips slide into the chip chutes (35) is disposed at the front of the column (8) and moves with the latter.

7. A processing centre according to claim 6, characterised in that the chip apron (22) is constructed after the style of a Venetian blind and is secured to the bed (1) at its bottom end and the processing head (14) is laterally displaceable at its top end.

8. A processing centre according to any one of claims 1 to 7, characterised in that different types of tool table (16, 16a to 16c) can be fitted by their brackets (17, 17a to 17c) on the inclined bed (1).

9. A processing centre according to any one of claims 1 to 8, characterised in that the tool magazine (45) with its tool changer (46) is fixed to be stationary next to the column (8), the tool changer being brought into position by a movement of the carrier (5).

## Revendications

1. Centre d'usinage composé d'un banc oblique (1) incliné vers l'arrière et qui comprend sur sa face antérieure une table porte-pièce, d'un chariot (5) en déplacement longitudinal sur le banc oblique (1), d'un montant (8) en déplacement transversal sur le chariot (5) et d'une tête d'usinage (14) en déplacement vertical sur le montant (8) ainsi que d'un magasin à outils avec un changeur d'outils, caractérisé en ce que la face antérieure verticale du banc oblique (1) présente des supports (33, 34) pour la fixation d'une console de table (17).

2. Centre d'usinage selon la revendication 1, caractérisé en ce qu'il est prévu au moins une trémie à copeaux (35) sur la face antérieure verticale du banc oblique (1).

3. Centre d'usinage selon la revendication 1 ou 2, caractérisé en ce que le montant (8) est agencé en déplacement transversal dans un plan horizontal sur le chariot (5).

4. Centre d'usinage selon l'une des revendications 1 à 3, caractérisé en ce que le montant (8) présente deux colonnes rigides (11) reliées solidairement l'une à l'autre par au moins une traverse (10, 12), les colonnes présentant sur leur côté intérieur des guidages (13) verticaux sur lesquels la tête d'usinage (14) est guidée des deux côtés.

5. Centre d'usinage selon l'une des revendications 1 à 4, caractérisé en ce que différentes têtes d'usinage (14, 14a à 14c) peuvent être montées au choix sur le montant (8).

6. Centre d'usinage selon l'une des revendications 1 à 5, caractérisé en ce que sur la face antérieure du montant (8) est agencé un tablier à copeaux (22) entraîné, sur lequel les copeaux glissent dans les trémies à copeaux (35).

7. Centre d'usinage selon la revendication 6, caractérisé en ce que le tablier à copeaux (22) est réalisé à la manière d'une jalousie et est fixé par son extrémité inférieure sur le banc (1) et en ce que la tête d'usinage (14) peut être déplacée latéralement sur l'extrémité supérieure du tablier.

8. Centre d'usinage selon l'une des revendications 1 à 7, caractérisé en ce que différentes tables porte-outil (16, 16a, à 16c) peuvent être montées avec leurs consoles (17, 17a à 17c) sur le banc oblique (1).

9. Centre d'usinage selon l'une des revendications 1 à 8, caractérisé en ce que le magasin à outils (45) avec son changeur d'outils (46) sont agencés en position fixe à côté du montant (8), le changeur d'outils étant abordé par un déplacement du chariot (5).
